## Europäisches Patentamt
## European Patent Office
## Office européen des brevets

(19)

(11) Numéro de publication: **0 121 734**
**B1**

(12)

# FASCICULE DE BREVET EUROPEEN

(45) Date de publication du fascicule du brevet:
**19.11.87**

(51) Int. Cl.⁴: **G 01 F 1/075**

(21) Numéro de dépôt: **84102204.9**

(22) Date de dépôt: **01.03.84**

(54) **Dispositif de mesure de la rotation d'une turbine de compteurs de débit de fluide.**

(30) Priorité: **21.03.83 FR 8305006**

(43) Date de publication de la demande:
**17.10.84 Bulletin 84/42**

(45) Mention de la délivrance du brevet:
**19.11.87 Bulletin 87/47**

(84) Etats contractants désignés:
**AT CH DE LI SE**

(56) Documents cités:
**DE - A - 2 943 184**
**DE - C - 840 772**
**GB - A - 885 100**
**US - A - 2 683 224**

(73) Titulaire: **SOCAM, 290 avenue du 8-Mai-1945,
F-Rillieux-la-Pape (FR)**

(72) Inventeur: **Dittrich, Gerhard, Schauinslandweg 25,
D-6905 Schriesheim (DE)**
Inventeur: **Gillant, Marc, 3 rue Emile Bertin,
F-54000 Nancy (FR)**

(74) Mandataire: **Puit, Thierry, c/o Centre de Recherches de
Pont-à-Mousson B.P. 28, F-54703 Pont-à-Mousson
Cedex (FR)**

ACTORUM AG

## Description

La présente invention est relative à un dispositif de mesure de la rotation d'une turbine de compteurs de débit de fluides, que ces fluides soient des liquides ou des gaz.

Dans les compteurs de débit à turbine, le comptage de la rotation de la turbine créée par le débit du fluide est généralement effectué à l'aide de dispositifs mécaniques à engrenages entraînant des roues graduées pour la lecture du débit. Ce type de dispositif de mesure présente les inconvénients suivants:

– le mécanisme de comptage freine mécaniquement la rotation de la turbine dans le fluide, ce qui perturbe la mesure, notamment pour la mesure de faibles débits;
– l'usure progressive du mécanisme de comptage entraîne une modification de la mesure effectuée par le dispositif;
– l'utilisation de couplages magnétiques pour transmettre le mouvement de la turbine au système de comptage présente des risques d'encrassement dus aux particules de fer contenues dans le fluide à compter.

Il a été proposé d'effectuer le comptage de la rotation de la turbine en plaçant deux électrodes situées dans le fluide, au voisinage de la turbine, et reliées à une source de tension électrique, des moyens de détection et de comptage mesurant les variations de la résistance électrique du fluide créée entre les deux électrodes au passage de la turbine. Ce type de dispositif, bien que remédiant aux inconvénients des dispositifs de comptage mécaniques, présente l'inconvénient que, si le fluide à mesurer a une résistance propre variable, cette variation de résistance vient perturber la mesure de la variation de résistance provoquée par le passage dans la turbine. De plus, ces dispositifs ont une consommation d'énergie électrique relativement élevée.

Il a été également proposé d'effectuer le comptage de la rotation d'une turbine en solidarisant, à la turbine, un aimant permanent qui est entraîné en rotation avec la turbine, un dispositif de détection magnétique assurant le comptage de la rotation de cet aimant. Ce dispositif connu présente le grave inconvénient que l'aimant, étant placé dans le fluide à mesurer, attire à lui les particules à base de fer contenues dans le fluide, créant ainsi un charge sur cet aimant risquant de bloquer la rotation de l'aimant et, par conséquent, de la turbine. De plus, l'alimentation de l'aimant pouvant varier, à l'usage et lors du vieillissement du dispositif, le comptage per ce dispositif peut perdre de sa fiabilité.

Il est également connu d'effectuer le comptage de la rotation d'une turbine en plaçant deux selfs d'un même oscillateur de part et d'autre d'un dispositif de modulation de flux électromagnétiques de manière à créer un accord ou un désaccord entre les circuits oscillants comportant ces deux selfs. Un tel dispositif à oscillateur crée des signaux de durée égale à la durée de coupure de sorte qu'il présente l'inconvénient qu'il nécessite la création de courants importants donc une alimentation de l'oscillateur à partir d'une tension relativement élevée incompatible avec une alimentation par des piles électriques.

On connaît aussi, par le document DE-A-840 772, un dispositif de mesure de la rotation d'une turbine comportant un dispositif de détection de la modulation du flux magnétique arrivant à un récepteur tel que décrit dans le préambule de la revendication 1.

La présente invention a pour but de résoudre les inconvénients des dispositifs de comptage des types connus ci-dessus et a pour objet un dispositif de mesure de la rotation d'une turbine de compteur de débit de fluide, dans lequel une turbine est entraînée en rotation dans une chambre de circulation du fluide qui traverse un corps du compteur. Ce dispositif comporte au moins un émetteur du flux électromagnétique, au moins un récepteur du flux électromagnétique émis, un dispositif de modulation de ce flux électromagnétique situé entre l'émetteur et le récepteur et entraîné en rotation par la turbine, et un dispositif de détection de la modulation du flux électromagnétique arrivant au récepteur, ce dispositif de détection de la modulation du flux électromagnétique arrivant au récepteur étant indépendant de l'émetteur et d'un dispositif d'alimentation en signaux électriques dudit émetteur, l'émetteur et le récepteur étant optiquement séparés l'un de l'autre.

Grâce à l'utilisation d'un émetteur et d'un récepteur de flux électromagnétiques, il est possible de réaliser un dispositif de comptage à un dispositif d'alimentation en signaux électriques de l'emetteur et à un dispositif de détection des signaux reçus par le récepteur ayant une faible consommation de courant et une alimentation par piles électriques à faible tension.

Dans ce dispositif de comptage, l'émetteur, le récepteur, le dispositif d'alimentation de l'émetteur et le dispositif de détection des signaux reçus par le récepteur sont placés hors de la chambre de circulation du fluide directement au-dessus de la platine 5, toutefois le dispositif d'alimentation de l'émetteur et le dispositif de détection peuvent être placés à une certaine distance de cette chambre.

Ainsi, l'émetteur et le récepteur de flux n'étant pas baignés par le fluide et n'utilisant qu'un flux électromagnétique de faible puissance, ils ne peuvent être influencés par celui-ci ni attirer de particules à base de fer contenues dans le fluide à compter. De plus, le dispositif de modulation du flux magnétique est neutre vis-à-vis du fluide à mesurer, de sorte qu'il peut être contenu dans la chambre de circulation du fluide. L'utilisation de la modulation d'un flux électromagnétique permet également de mesurer de faibles vitesses de rotation de la turbine donc de faibles débits du fluide.

Dans ce dispositif de mesure selon l'invention, le dispositif de modulation du flux électromagnétique est soit un dispositif à forte perméabilité électromagnétique soit, au contraire, un dispositif formant écran au flux électromagnétique.

Ainsi, il est facile de détecter le passage du dispositif de modulation du flux électromagnétique entre émetteur et récepteur.

Un mode particulier de réalisation de l'invention réside encore dans le fait que deux couples émetteurs-récepteurs sont utilisés, décalés angulairement l'un de l'autre, le comptage de la rotation n'étant effectué que lorsque la détection de passage du dispositif de modulation est réalisée successivement par les deux récepteurs. Ainsi, tout comptage intempestif, dû à des oscillations de faible amplitude du dispositif de modulation, n'est pas effectué, le comptage n'ayant lieu que si le déplacement du dispositif de modulation correspond au moins au décalage angulaire des couples émetteurs-récepteurs, ce décalage étant calculé de façon à être toujours supérieur à l'amplitude maximale supposée des oscillateurs de la turbine autour d'une position fixe.

D'autres caractéristiques et avantages apparaîtront au cours de la description qui va suivre.

Aux dessins annexés, donnés uniquement à titre d'exemples:

- la Fig. 1 est une vue en coupe partielle d'un compteur d'eau équipé d'un dispositif de mesure selon l'invention;
- la Fig. 2 est une vue en coupe selon la ligne 2-2 de la Fig. 1 d'un compteur d'eau équipé d'un dispositif de mesure selon l'invention;
- la Fig. 3 est une vue schématique d'un dispositif d'alimentation de l'émetteur et d'un dispositif de détection et de comptage de la rotation d'une turbine d'un dispositif de mesure selon l'invention;
- la Fig. 4 est une vue d'un compteur d'eau équipé d'une variante de dispositif de mesure selon l'invention;
- la Fig. 5 est une vue en coupe selon la ligne 5-5 de la Fig. 4 d'un compteur d'eau équipé d'une variante de dispositif de mesure selon l'invention;
- la Fig. 6 est une vue en coupe partielle d'un compteur d'eau équipé d'une autre variante du dispositif de mesure selon l'invention;
- la Fig. 7 est une vue en coupe selon la ligne 7-7 de la Fig. 6 d'un compteur d'eau équipé d'une autre variante de dispositif de mesure selon l'invention.

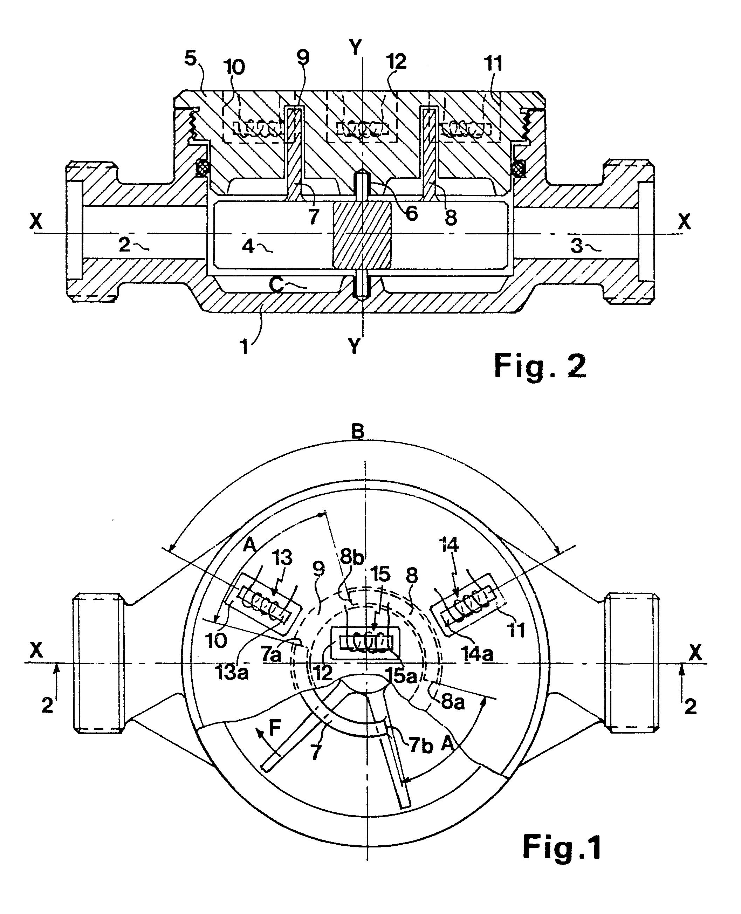

Selon l'exemple de réalisation présenté aux Fig. 1 et 2, le dispositif de mesure de la rotation d'une turbine est appliqué à un compteur d'eau à un corps 1 comportant un conduit d'entrée 2 et un conduit de sortie 3 d'eau de même axe XX et à une turbine ou roue à ailettes 4, en matière plastique, montée rotative, d'axe YY, dans le corps 1 et entraînée en rotation par l'eau à compter. Le corps 1 est fermé à sa partie supérieure par une platine 5, en matière plastique, formant couvercle, vissée de manière étanche dans le corps 1 et servant également de palier 6 à la turbine 4, de manière à former une chambre C de circulation de l'eau à compter. La turbine ou roue à ailettes 4 porte à sa partie supérieure deux écrans 7 et 8 formés par deux portions diamétralement opposées d'un cylindre d'axe YY et limitées par des génératrices, 7a et 7b pour l'écran 7, 8a et 8b pour l'écran 8, un angle A d'environ 45° de sommet YY étant formé par les bords adjacents 7a-8b ou 7b-8a, de chacun des écrans 7 et 8. Ces écrans sont réalisés en un matériau métallique tel que de l'aluminium ou en une même matière plastique que la turbine 4 mais recouverte sur au moins une de leurs faces par un revêtement métallique tel que, par exemple, du chrome.

La platine 5 comporte à sa partie inférieure, côté turbine 4, une gorge 9 circulaire et profonde destinée à permettre l'introduction des écrans 7 et 8 dans la platine 5. Cette platine comporte à sa partie supérieure, du côté opposé à la chambre C de circulation de l'eau à compter, deux évidements radiaux 10 et 11, en forme de parallélépipèdes rectangles, situés à l'extérieur de la gorge circulaire 9 et formant entre eux un angle B d'environ 120°, et un évidement 12 en forme de parallélépipède rectangle parallèle à l'axe XX dont les extrémités sont dirigées vers les deux évidements 10 et 11. Chaque évidement 10-11-12 contient une bobine électrique respectivement 13-14-15 formée chacune d'un barreau à section circulaire 13a-14a-15a en matériau magnétique tel que de la ferrite sur lequel est enroulé sur plusieurs tours un fil conducteur de courant électrique 13b-14b-15b. Les bobines électriques 13 et 14 forment des récepteurs de flux électromagnétiques émis par la bobine électrique 15 ou émetteur de flux électromagnétiques. La bobine formant émetteur est reliée à un dispositif d'alimentation en signaux électriques tandis que les bobines formant récepteurs sont reliées à un dispositif de détection suivi d'un dispositif de comptage de la modulation du flux électromagnétique.

Ces dispositifs d'alimentation, de détection et de comptage sont situés directement au-dessus de la platine 5 ou à une certaine distance du compteur.

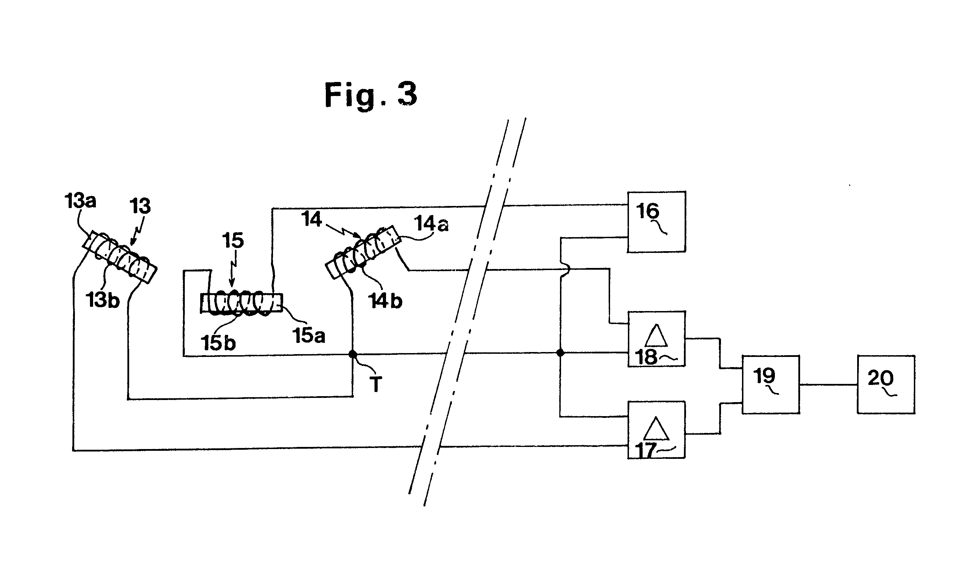

Un exemple de ces dispositifs est représenté à la Fig. 3. C'est ainsi que l'un des fils de sortie 13b-14b-15b de chacune des bobines, respectivement 13-14-15, est relié à un point commun T faisant office de masse. La bobine formant émetteur 15 est alimentée par un dispositif d'alimentation 16 délivrant des signaux de très courte durée en forme de dents de scie. Chacune des bobines ou récepteurs 13-14 est reliée à un dispositif de mise en forme et d'amplification ou amplificateur respectivement 17, 18 du signal reçu par le récepteur correspondant. La sortie de chacun des amplificateurs 17-18 délivrant un signal déterminé est reliée à une entrée d'une bascule électronique ou bistable 19 changeant d'état à chaque réception d'un signal provenant de l'un des amplificateurs 17-18 et destinée à délivrer un signal lorsque chacun des amplificateurs 17-18 aura délivré successivement un signal d'entrée. Le bistable 19 est relié à un compteur électronique 20 qui assure le comptage des signaux émis par le bistable 19. Amplificateurs, bistable et compteur électronique forment le dispositif de détection.

Lorsque l'eau traverse le corps 1 du compteur d'eau en passant par les conduits d'entrée 2 et de sortie 3, la turbine ou roue à ailettes 4 est mise en rotation par l'eau, dans le sens de la flèche F, entraînant avec elle les écrans 7 et 8. L'oscillateur 16 envoie des impulsions à l'émetteur 15 qui transmet des ondes électromagnétiques guidées vers les récepteurs 13, 14 par les barreaux 15a-13a-14a. Lors de la rotation des écrans 7 et 8 avec la turbine 4, chaque fois qu'un écran 7 ou 8 passe entre la bobine émettrice ou émetteur 15 et les bobines réceptrices ou récepteurs 13-14, aucune onde électromagnétique n'est reçue par ces récepteurs de sorte qu'aucun signal n'est fourni par les amplificateurs 17 ou 18 au bistable 19 et aucun changement d'état de ce bistable n'a lieu.

Lors de la rotation des écrans 7 et 8 dans le sens de la flèche F, l'un des espaces d'angle A situé entre les écrans 7 et 8 vient, par exemple entre l'émetteur 15 et le récepteur 13, autorisant la réception des ondes électromagnétiques par ce récepteur qui délivre par l'intermédiaire de l'amplificateur 17 un signal au bistable 19 assurant son changement d'état, par exemple, l'envoi d'un signal électrique sur le compteur 20. Dans cette position, l'écran 8 empêche la transmission des ondes électromagnétiques au récepteur 14 qui ne délivre aucun signal.

En continuant à tourner, l'écran 7 vient faire écran au récepteur 13, l'écran 8 empêchant toujours la transmission des ondes au récepteur 14, aucun signal de changement d'état n'est adressé au bistable qui continue donc à envoyer un signal électrique au compteur 20.

Lors de la poursuite de la rotation de la turbine 4, lorsque l'écran 8 n'est plus entre le récepteur 14 et l'émetteur 15 et que l'écran 7 est encore entre le récepteur 13 et l'émetteur 15, l'espace d'agnle A est situé entre récepteur 14 et émetteur 15. Ce récepteur 14 reçoit alors seul les ondes électromagnétiques émises par l'émetteur 15 de sorte qu'un signal est émis par l'amplificateur 18 au bistable 19 qui change d'état, annulant ainsi le signal transmis précédemment au compteur 20. Celui-ci assure alors le comptage d'un demi-tour de la turbine.

Il se produit le même fonctionnement lorsque l'autre espace A vient se placer entre émetteur 15 et récepteur 13, puis entre émetteur 15 et récepteur 14. Ainsi, le comptage de la rotation de la turbine est effectué, chaque tour de la turbine correspondant à deux signaux émis par le bistable 19.

Pour permettre un fonctionnement correct de l'exemple de réalisation décrit, il est nécessaire que les ondes électromagnétiques émises par l'émetteur 15 n'arrivent pas simultanément aux deux récepteurs 13 et 14 donc que les angles A soient aussi faibles que possible et que les bobines ne soient pas diamétralement opposées. Il est nécessaire aussi que cet angle A soit suffisamment grand pour permettre une bonne transmission des ondes électromagnétiques aux récepteurs 13-14. C'est ainsi que, pour des compteurs d'eau de dimensions courantes, l'angle B des récepteurs étant d'environ 120°, l'angle A d'espace libre entre les écrans 7 et 8 doit être compris entre 15 et 90° environ.

Pour avoir un bon fonctionnement du dispositif selon l'invention tout en ayant une consommation de courant électrique minimale, la fréquence des signaux émis par l'émetteur doit être aussi petite que possible mais suffisante pour permettre une détection de la rotation de la turbine lorsqu'elle tourne à une vitesse la plus grande correspondant au débit maximum de comptage du compteur d'eau. C'est ainsi que la fréquence des signaux doit être supérieure à la valeur de la relation: $\pi/(\pi\text{-}A)\, T$, l'angle A étant exprimé en radians et T étant le temps exprimé en secondes par la turbine pour faire un demitour lorsque dans le compteur d'eau passe le débit d'eau maximal.

Grâce à l'invention, les récepteurs 13-14 et l'émetteur 15 étant placés hors de la chambre de circulation de l'eau à compter, leur fonctionnement ne peut être perturbé par l'eau. De plus, ce dispositif selon l'invention permet d'assurer un comptage plus fiable en raison de l'absence de transmission mécanique susceptible d'usure ou de transmission par aimant susceptible de capter des particules ferreuses contenues dans l'eau à compter.

Ce dispositif est insensible à l'encrassement par l'eau et permet de mesurer de faibles débits car il ne provoque aucun freinage de la turbine 4.

D'autre part, le dispositif de détection peut être situé à une certaine distance du compteur donc à des endroits plus accessibles pour permettre un relevé facile du comptage.

L'utilisation d'un dispositif d'alimentation 16 créant des signaux de très courte durée (durée du signal très inférieur au temps de coupure entre deux signaux successifs) permet de ne requérir qu'une faible consommation d'énergie électrique de sorte que ces dispositifs peuvent être alimentés par des piles électriques ou des accumulateurs de courant électrique.

La présence de deux récepteurs, décalés angulairement, permet d'assurer un comptage uniquement dans le cas où un espace d'angle A passe successivement devant les deux récepteurs 13, 14. Dans le cas d'un seul récepteur, en cas d'arrêt d'un bord 7a-7b-8a-8b des écrans 7-8 devant une bobine réceptrice et d'oscillation de la turbine, il y a risque qu'un comptage soit effectué bien que la turbine 4 n'ait pas tourné donc sans circulation d'eau dans le corps du compteur.

Une variante de l'invention consiste à remplacer les deux écrans 7 et 8 par un seul écran cylindrique pourvu d'une seule fente d'angle identique à l'angle A. Ainsi, à chaque tour de la turbine 4, ne correspond qu'un seul signal reçu par le dispositif de comptage 20. Dans ce cas, il suffit pour avoir un bon fonctionnement du dispositif de mesure, que les bobines réceptrices soient décalées d'un angle B supérieur à l'angle A de la fente.

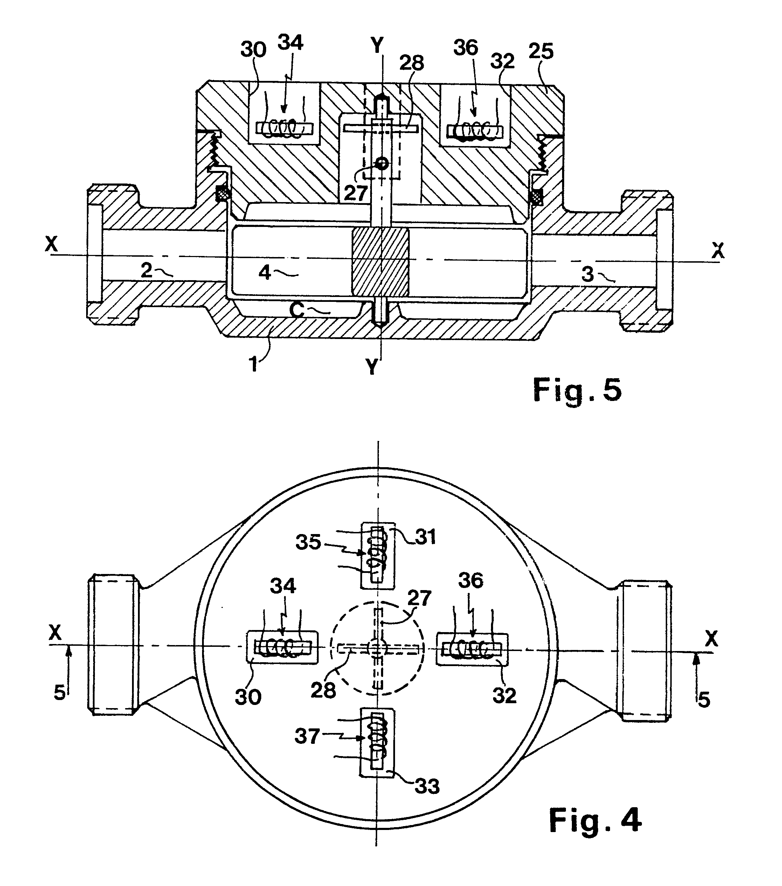

Une autre variante de l'invention telle que représentée aux Fig. 4 et 5 consiste en l'utilisation, à la place des écrans 7 et 8, de deux barreaux 27–28 en matériau magnétique, à forte perméabilité magnétique, tel que de la ferrite, portés par l'axe de rotation de la turbine 4. Ces barreaux sont placés orthogonalement et dans des plans différents orthogonaux à l'axe YY de la turbine 4. Dans ce cas, la platine 25 fermant le corps 1 du compteur comporte quatre évidements 30–31–32–33 radiaux et régulièrement répartis autour de l'axe YY. Deux bobines émettrices 34–35 sont situées dans deux évidements voisins 30–31 tandis que deux bobines réceptrices 36–37 sont situées dans deux autres évidements 32–33. Les bobines émettrices et réceptrices sont identiques à celles précédemment décrites. Les bobines émettrices-réceptrices forment deux couples émetteur-récepteur diamétralement opposés 34–36 et 35–37. Les évidements 31–33 et 30–32 ont des profondeurs différentes de façon que les bobines 34–36 soient dans le même plan que le barreau 28 et que les bobines 35–37 soient dans le même plan que celui du barreau 27. Le dispositif d'alimentation et de détection sont du même type que ceux décrits précédemment.

Le fonctionnement du dispositif de mesure selon cette variante ne diffère de celui décrit ci-dessus que par le fait qu'au lieu d'assurer un arrêt de la transmission des ondes électromagnétiques par des écrans comme précédemment, l'alignement des barreaux 27–28 avec le couple émetteur-récepteur associés respectivement 35–37 et 34–36 assure une augmentation des ondes électromagnétiques reçues par les récepteurs. Le dispositif selon cette variante de réalisation présente les mêmes avantages que précédemment.

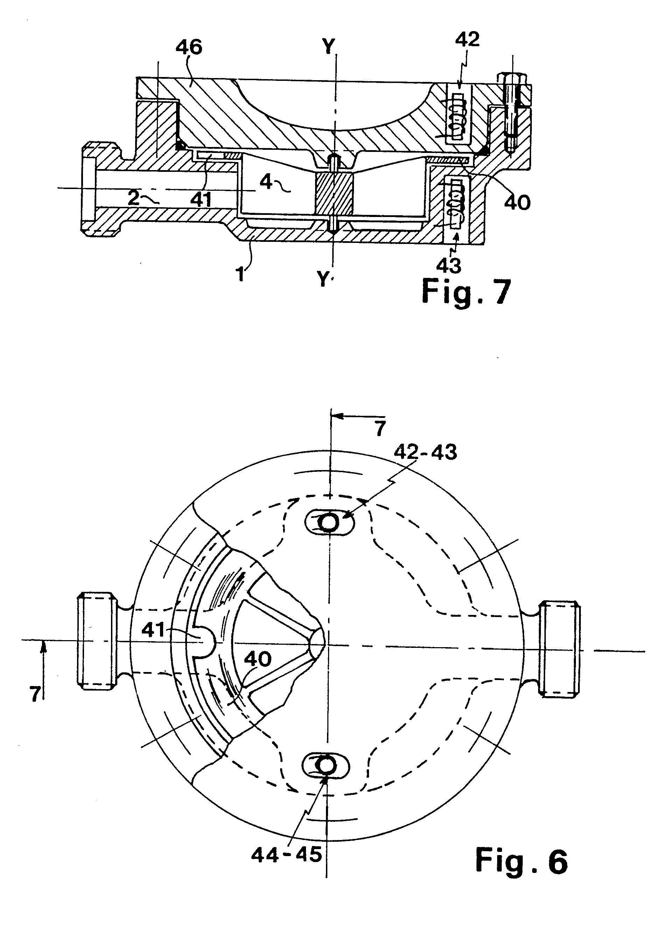

Une autre variante de réalisation représentée aux Fig. 6 et 7 consiste en ce que la turbine 4 comporte à sa partie supérieure, sur sa périphérie, une couronne pleine 40 formant écran pourvue d'une échancrure 41 destinée à venir passer devant deux couples émetteur-récepteur d'axe YY 42–43 et 44–45 diamétralement opposés et portés, d'une part, par une platine 46 de fermeture supérieure du corps 1 et, d'autre part, par le corps 1 lui-même. Le fonctionnement d'un tel dispositif équipé des mêmes dispositifs d'alimentation et de détection que cidessus est identique à celui précédemment décrit. Dans ce cas, à un tour de rotation de la turbine 4 correspond un seul signal émis au compteur électronique 20 par le bistable 19.

Alors que, dans l'exemple de réalisation ci-dessus, la turbine 4 comporte une couronne pleine 40 formant écran située à la périphérie de cette turbine, il est envisageable que l'écran de modulation des ondes électromagnétiques soit un disque situé au centre de la turbine et comportant un orifice de passage des ondes électromagnétiques venant s'aligner, lors de la rotation de la turbine, avec deux couples émetteur-récepteur situés également près de l'axe de la turbine.

Alors que le dispositif de mesure selon l'invention est décrit dans son application à un compteur d'eau, il est tout-à-fait envisageable, sans sortir du cadre de cette invention, d'appliquer cette technique à des compteurs à gaz à turbine.

## Revendications

1. Dispositif de mesure de la rotation d'une turbine de compteur de débit de fluide dans lequel la turbine (4) est entraînée en rotation dans une chambre (C) de circulation du fluide qui traverse un corps (1) du compteur et comportant au moins un émetteur de flux électromagnétique (15), au moins un récepteur du flux électromagnétique (13, 14) émis, un dispositif de modulation de ce flux électromagnétique, situé entre l'émetteur (15) et le récepteur (13, 14) et entraîné en rotation par la turbine (4), et un dispositif de détection de la modulation du flux électromagnétique arrivant au récepteur, caractérisé en ce que le dispositif de détection de la modulation (17–20) du flux électromagnétique arrivant au récepteur est indépendant de l'émetteur (15) et d'un dispositif d'alimentation (16) en signaux électriques dudit émetteur (15), et que l'émetteur (15) et le récepteur (13, 14) sont optiquement séparés l'un de l'autre.

2. Dispositif de mesure selon la revendication 1 caractérisé en ce que le dispositif de modulation du flux électromagnétique est un dispositif à forte perméabilité électromagnétique (27–28).

3. Dispositif de mesure selon la revendication 2 caractérisé en ce que le dispositif à forte perméabilité magnétique (27–28) est un barreau de ferrite porté par la turbine (4) et se déplaçant entre l'émetteur (34, 35) et le récepteur de flux électromagnétique (36, 37).

4. Dispositif de mesure selon la revendication 3 caractérisé en ce que le dispositif de modulation de flux électromagnétique est constitué de deux barreaux de ferrite (27, 28) perpendiculaires entre eux dans deux plans parallèles, entraînés par la turbine (4) et se déplaçant chacun devant un couple émetteur-récepteur (34–36, 35–37), eux-même orthogonaux.

5. Dispositif de mesure selon la revendication 1 caractérisé en ce que le dispositif de modulation du flux électromagnétique est un dispositif (7–8) formant écran au flux électromagnétique.

6. Dispositif de mesure selon la revendication 5 caractérisé en ce que l'écran (7–8) est formé d'un cylindre pourvu d'au moins une fente permettant la transmission périodique du flux électromagnétique entre l'émetteur (15) et le récepteur (13, 14) lors de la rotation de la turbine (4).

7. Dispositif selon la revendication 6 caractérisé en ce qu'il comporte deux couples émetteurs-récepteurs (13–15, 14–15) de flux magnétique décalés angulairement, mais non diamétralement opposés, et que le cylindre comporte deux fentes diamétralement opposées.

8. Dispositif de mesure selon la revendication 1 caractérisé en ce qu'il comporte deux couples émetteurs-récepteurs (13–15, 14–15) décalés angulairement l'un de l'autre, le comptage de la rotation n'étant effectué que lorsque la détection du passage du dispositif de modulation est réalisé successivement par les deux récepteurs (13, 14).

9. dispositif de mesure selon la revendication 8 caractérisé en ce que le dispositif d'alimentation se compose d'un dispositif d'alimentation (16) en signaux de très courte durée de chacun des émetteurs (15) et que chaque récepteur (13, 14) est relié par un dispositif de mise en forme et d'amplification (17, 18) à une bascule électronique d'alimentation (19) d'un compteur électronique (20).

**Patentansprüche**

1. Vorrichtung zum Messen der Drehung einer Turbine eines Durchflusszählers für ein Fluid, in welcher die Turbine (4) in einer Kammer (C) durch Umwälzung des ein Zählergehäuse (1) durchquerenden Fluids drehend angetrieben ist, mit mindestens einem Elektromagnetfluss-Emitter (15), mindestens einem Elektromagnetfluss-Empfänger (13, 14), einer Moduliereinrichtung für den Elektromagnetfluss, welche zwischen dem Emitter (15) und dem Empfänger (13, 14) angeordnet ist und durch die Turbine (4) drehend angetrieben ist, und mit einer Erfassungseinrichtung für die Modulation des Elektromagnetflusses auf den Empfänger, dadurch gekennzeichnet, dass die Erfassungseinrichtung (17-20) für die Modulation des Elektromagnetflusses zum Empfänger unabhängig ist vom Emitter (15) und von einer Zuführeinrichtung (16) für elektrische Signale zum Emitter (15), und dass der Emitter (15) und der Empfänger (13, 14) optisch voneinander getrennt sind.

2. Messvorrichtung nach Anspruch 1, dadurch gekennzeichnet, dass die Einrichtung zur Elektromagnetflussmodulierung eine Einrichtung (27-28) mit starker elektromagnetischer Permeabilität ist.

3. Messvorrichtung nach Anspruch 2 oder 3, dadurch gekennzeichnet, dass die Einrichtung (27-28) mit starker magnetischer Permeabilität durch eine Stange aus Ferrit gebildet ist, welche auf der Turbine (4) gelagert ist und sich zwischen dem Emitter (34, 35) und dem Empfänger (36, 37) für den Elektromagnetfluss bewegt.

4. Messvorrichtung nach Anspruch 3, dadurch gekennzeichnet, dass die Einrichtung zur Elektromagnetflussmodulierung durch zwei Stangen (27, 28) aus Ferrit gebildet ist, die zueinander senkrecht in zwei parallelen Ebenen angeordnet, von der Turbine (4) angetrieben sind und sich jede vor einem Emitter-Empfängerpaar (34-36, 35-37) vorbeibewegen, die zueinander orthogonal angeordnet sind.

5. Messvorrichtung nach Anspruch 1, dadurch gekennzeichnet, dass die Einrichtung zur Elektromagnetflussmodulierung durch eine eine Blende für den Elektromagnetfluss bildende Einrichtung (7-8) gebildet ist.

6. Messvorrichtung nach Anspruch 5, dadurch gekennzeichnet, dass die Blende (7-8) durch einen Zylinder gebildet ist, der mit mindestens einem Schlitz versehen ist, der die periodische Übertragung des Elektromagnetflusses zwischen dem Emitter (15) und dem Empfänger (13, 14) während der Drehung der Turbine (4) zulässt.

7. Vorrichtung nach Anspruch 6, dadurch gekennzeichnet, dass die Vorrichtung zwei Emitter-Empfängerpaare (13-15, 14-15) für den Elektromagnetfluss aufweist, die unter einem Winkel zueinander versetzt, jedoch nicht diametral gegenüberliegend angeordnet sind, und dass der Zylinder zwei diametral gegenüberliegend angeordnete Schlitze aufweist.

8. Messvorrichtung nach Anspruch 1, dadurch gekennzeichnet, dass die Vorrichtung zwei Emitter-Empfängerpaare (13-15, 14-15) aufweist, die zueinander unter einem Winkel versetzt angeordnet sind, wobei die Zählung der Drehung nur bewirkt wird, wenn die Erfassung des Durchgangs der Modulationseinrichtung aufeinanderfolgend durch die beiden Empfänger (13, 14) erfolgt ist.

9. Messvorrichtung nach Anspruch 8, dadurch gekennzeichnet, dass die Zuführeinrichtung eine Einrichtung (16) für Signale mit sehr kurzer Dauer von jedem der Emitter (15) gebildet ist und dass jeder Empfänger (13, 14) durch eine Form- und Verstärkungseinrichtung (17, 18) mit einer elektronischen Kippschaltung (19) eines elektronischen Zählers (20) verbunden ist.

**Claims**

1. Device for measuring the rotation of a turbine of a counter for the rate of flow of fluid in which the turbine (4) is set in rotation in a chamber (C) for the circulation of fluid which passes through a body (1) of the counter and comprising at least one electromagnetic flux emitter (15), at least one receiver (13, 14) for the electromagnetic flux emitted, a device for the modulation of the electromagnetic flux, the said device being situated between the emitter (15) and the receiver (13, 14) and set in rotation by the turbine (4) and a device for detecting the modulation of the electromagnetic flux arriving at the receiver, characterised in that the device (17-20) for detecting the modulation of the electromagnetic flux arriving at the receiver is independent of the emitter (15) and of a device (16) for supplying electrical signals of the said emitter (15) and that the emitter (15) and receiver (13, 14) are optically separated from each other.

2. Measuring device according to Claim 1, characterised in that the device for modulation of the electromagnetic flux is a device (27-28) having high electromagnetic permeability.

3. Measuring device according to Claim 2, characterised in that the device (27-28) having high magnetic permeability is a bar of ferrite supported by the turbine (4) and moving between the emitter (34, 35) and the receiver of electromagnetic flux (36, 37).

4. Measuring device according to Claim 3, characterised in that the device for modulation of the electromagnetic flux is constituted by two bars of ferrite (27, 28) perpendicular to each other in two parallel planes, driven by the turbine (4) and each moving in front of an emitter/receiver pair (34-36, 35-37), which are themselves orthogonal.

5. Measuring device according to Claim 1, characterised in that the device for modulation of the electromagnetic flux is a device (7-8) forming a screen to the electromagnetic flux.

6. Measuring device according to Claim 5, characterised in that the screen (7-8) is formed of a cylinder provided with at least one slot allowing the periodic transmission of the electromagnetic flux between the emitter (15) and the receiver (13-14) at the time of rotation of the turbine (4).

7. Device according to Claim 6, characterised in that it comprises two pairs of magnetic flux emitters/receivers (13-15, 14-15) offset angularly, but not diametrically opposed and that the cylinder comprises two diametrically opposed slots.

8. Measuring device according to Claim 1, characterised in that it comprises two pairs of emitters/receivers (13-15, 14-15) offset angularly one from the other, counting of the rotation being carried out solely when the detection of the passage of the modulation device is achieved successively by the two receivers (13, 14).

9. Measuring device according to Claim 8, characterised in that the supply device is composed of a device (16) supplying signals of very short duration from each of the emitters (15) and that each receiver (13, 14) is connected by a shaping and amplification device (17, 18) to an electronic supply trigger (19) of an electronic counter (20).

# Fig. 2

# Fig.1

Fig. 3

Fig. 5

Fig. 4

**Fig. 7**

**Fig. 6**